# FASCICULE DE BREVET EUROPEEN

(11) **EP 1 475 268 B1**
(45) Date de publication et mention de la délivrance du brevet: **16.08.2006**
(21) Numéro de dépôt: 04291176.8
(22) Date de dépôt: 06.05.2004
(51) Int. Cl.: B60Q 1/04, B60Q 1/26

(54) **Agencement pour le positionnement et la fixation d'un élément d'équipement sur un véhicule automobile**
Anordnung zur Positionierung und Befestigung eines Ausstatungsteils in einem Kraftfahrzeug
Arrangement for positioning and fastening an equipment element in a motor vehicle

(30) Priorité: 09.05.2003 FR 0305633
(43) Date de publication de la demande: 10.11.2004
(73) Titulaire: VALEO VISION, 93012 Bobigny Cédex (FR)
(72) Inventeur: Dinant, Franck, 1460 Virginal (BE)
(74) Mandataire: Renous Chan, Véronique

(56) Documents cités:
- DE-A- 4 133 002
- DE-A- 19 632 688
- FR-A- 894 131
- FR-A- 2 753 147
- FR-A- 2 785 242

## Description

L'invention concerne un agencement pour le positionnement et la fixation d'un élément d'équipement sur un véhicule automobile.

Elle se rapporte plus précisément à un agencement pour le positionnement et la fixation d'un projecteur sur un bouclier ou pare-chocs de véhicule automobile.

Lors de la fabrication d'un véhicule automobile, les tolérances de réalisation des divers éléments du véhicule impliquent l'existence de jeux entre les éléments d'équipement et les éléments de structure et de carrosserie qui les entourent. Ces jeux peuvent également différer d'un véhicule à l'autre issus d'une même chaîne de fabrication. Ces jeux doivent être maîtrisés le plus possible afin de ne pas nuire à l'aspect visuel général du véhicule automobile et/ou être la source de dysfonctionnements de certains éléments d'équipement.

Dans le cas d'un montage d'un élément d'équipement tel qu'un projecteur dans une cavité d'un élément de structure tel qu'un bouclier ou pare-chocs, l'élément d'équipement doit être centré très précisément dans cette cavité. En effet, le jeu entre cavité et élément d'équipement est très petit de l'ordre du millimètre et toute asymétrie de ce jeu autour de i'éiément d'équipement est très visible et nuit à l'esthétique du véhicule automobile.

Par ailleurs, afin d'empêcher le démontage et le vol de tels éléments d'équipement, il est nécessaire de fixer l'élément d'équipement sur l'élément de structure de façon relativement fiable par exemple par vissage sur la face non accessible de cet élément de structure.

Il est donc connu de réaliser ce type de montage grâce à un agencement pour le positionnement et la fixation d'un élément d'équipement par encastrement selon un premier axe dans une cavité d'un élément de structure d'un véhicule automobile, comportant des moyens de positionnement constitués de surfaces de contact de l'élément d'équipement sur la cavité et des moyens de fixation comportant une vis.

Un tel agencement connu comporte une vis d'axe longitudinal perpendiculaire à ce premier axe d'encastrement. L'effort de serrage de cette vis tend à détruire le centrage de l'élément d'équipement dans la cavité de l'élément de structure, puisqu'il agit directement sur le jeu transversal entre les deux éléments, cette action se répercutant sur le jeu visible à l'extérieur du véhicule.

Le monteur du projecteur doit donc régler l'effort de serrage de la vis très précisément si l'on ne souhaite pas modifier ce jeu de centrage, ce qui est délicat techniquement et peu adapté à un montage manuel rapide ou à un montage en série.

Par ailleurs, l'agencement de réception dans le boîtier de projecteur et dans le bouclier d'une telle vis d'axe longitudinal perpendiculaire à l'axe d'encastrement nécessite un moulage avec tiroir de ces deux pièces relativement complexe et coûteux.

Un agencement selon la préambule de la revendication 1 est connu du document FR 2 785242. Il est connu de ce document un feu arrière de véhicule comprenant un boîtier ouvert sur a face avant et un bloc optique de forme sensiblement parallélépipédique monté par emboîtement latéral dans le boîtier. Le bloc optique comprend d'une part sur sa face inférieure ou supérieure une glissière destinée à coopérer avec un rail fixé sur une paroi en regard du boîtier, et d'autre part des moyens de raccordement électrique et des moyens de fixation mécanique dans le boîtier.

Il est connu du document FR 894 131 un phare encastré par l'avant dans un véhicule, le phare étant guidé dans la carrosserie de façon orientable.

Il est connu du document DE 196 32 688 un mode de fixation d'un projecteur sur un véhicule, où le projecteur est muni de plots aptes à coulisser dans deux glissières latérales prévues dans l'ouverture dans laquelle il doit s'insérer dans le véhicule.

L'invention résout ce problème et, pour ce faire, elle se rapporte à un agencement pour le positionnement et la fixation d'un élément d'équipement par encastrement selon un premier axe dans une cavité d'un élément de structure d'un véhicule automobile, comprenant des moyens de positionnement constitués de paires de surfaces de contact complémentaires sur l'élément d'équipement et sur la cavité et des moyens de fixation comportant un élément de verrouillage assurant le serrage d'une paroi de l'élément d'équipement et d'une paroi d'élément de structure, caractérisé en ce que ledit élément de serrage est unique et est un élément de serrage dans une direction substantiellement parallèle audit premier axe.

Par élément de structure est entendue une pièce solidaire ou solidarisée à la carrosserie du véhicule automobile, le positionnement et la fixation de l'élément d'équipement pouvant être effectués sur cet élément de structure, avant ou après la solidarisation de ce dernier sur le véhicule.

Un tel agencement assure une fixation de l'élément d'équipement sans perturbation de son positionnement centré dans la cavité de l'élément de structure.

Selon un mode de réalisation préféré de l'invention, ledit élément de serrage est une vis d'axe longitudinal substantiellement parallèle audit premier axe.

L'invention présente l'avantage de nécessiter un nombre particulièrement réduit de pièces annexes, à savoir une seule vis de fixation.

Selon un mode de réalisation préféré, lesdits moyens de positionnement sont des moyens d'auto centrage de l'élément d'équipement dans ladite cavité de l'élément de structure.

Et avantageusement, lesdits moyens de positionnement comportent au moins six paires de surfaces de contact complémentaires de dimension réduite sur l'élément d'équipement et sur la cavité, ces surfaces de contact formant un système isostatique.

Cette caractéristique présente l'avantage de permettre un bon guidage lors du montage de l'élément d'équipement sur l'élément de structure, d'assurer un centrage parfait de cet élément d'équipement dans la cavité le recevant de l'élément de structure et un bon maintien de l'élément d'équipement en fonctionnement du véhicule automobile.

De tels moyens de positionnement assurent l'auto centrage parfait de l'élément d'équipement dans la cavité, l'élément de serrage présentant la particularité de ne pas perturber cet auto-centrage lorsqu'il vient serrer la paroi de l'élément d'équipement sur la paroi de l'élément de structure jusque dans sa position de verrouillage.

Avantageusement, lesdits moyens de positionnement comportent trois paires de surfaces de contact complémentaires perpendiculaires audit premier axe.

De préférence, lesdits moyens de positionnement comportent deux paires de surfaces de contact complémentaires perpendiculaires à un deuxième axe perpendiculaire au premier axe.

De préférence, lesdits moyens de positionnement comportent une paire de surfaces de contact complémentaires perpendiculaire à un troisième axe perpendiculaire au premier axe et au deuxième axe.

Selon un mode de réalisation particulier, le premier axe est substantiellement parallèle à l'axe horizontal longitudinal du véhicule.

De préférence, l'agencement comporte également des moyens de maintien en position.

Ces moyens contribuent au positionnement de l'élément d'équipement dans l'élément de structure et assurent son maintien avant le vissage de la vis, l'élément de structure pouvant être non monté sur la carrosserie du véhicule au moment de la fixation de l'élément d'équipement et pouvant être basculé par exemple de 90° pour ce montage.

Et lesdits moyens de maintien peuvent comporter un dispositif de clipsage disposé à proximité du point bas des deux éléments.

Selon une application préférée de l'invention, ledit élément de structure est un bouclier ou pare-chocs ou un élément de type décoratif lié à la carrosserie du véhicule.

L'invention concerne également un dispositif d'éclairage et/ou de signalisation constituant un élément d'équipement destiné à être positionné et fixé dans une cavité d'un élément de structure d'un véhicule automobile au moyen d'un agencement selon l'une des revendications précédentes, caractérisé en ce qu'il comporte un boîtier comprenant un filetage intérieur unique d'axe longitudinal parallèle audit premier axe.

L'invention concerne également le véhicule muni du dispositif en question.

Selon un mode de réalisation préféré, son boîtier comporte au moins trois surfaces de contact perpendiculaire audit premier axe.

Avantageusement, son boîtier comporte au moins deux surfaces de contact perpendiculaire à un deuxième axe perpendiculaire audit premier axe.

Et de préférence, dans ce cas, son boîtier comporte au moins une surface de contact perpendiculaire à un troisième axe perpendiculaire au premier axe et au deuxième axe.

Par ailleurs, son boîtier peut comporter un élément de clipsage à proximité de son point bas.

L'invention est décrite ci-après plus en détail à l'aide de figures ne représentant qu'un mode de réalisation préféré de l'invention.
La figure 1 est une vue en perspective d'un agencement conforme à l'invention. Dans un souci de simplification, les directions et positions qualifiées d'avant, arrière, supérieur, inférieur, vertical, horizontal, latéral, feront dans ce qui suit référence à la position représentée sur cette figure.
Les figures 2 et 3 sont des vues en section selon un plan vertical et un plan horizontal contenant l'axe X de la figure 1.
La figure 4 est une vue en section selon un plan IV - IV contenant l'axe B de la figure 1.
La figure 5 est une vue avant de l'élément de structure conforme à l'invention.
La figure 6 est une vue en perspective arrière de l'élément d'équipement conforme à l'invention.
La figure 7 est une vue en perspective latérale de l'élément d'équipement conforme à l'invention.

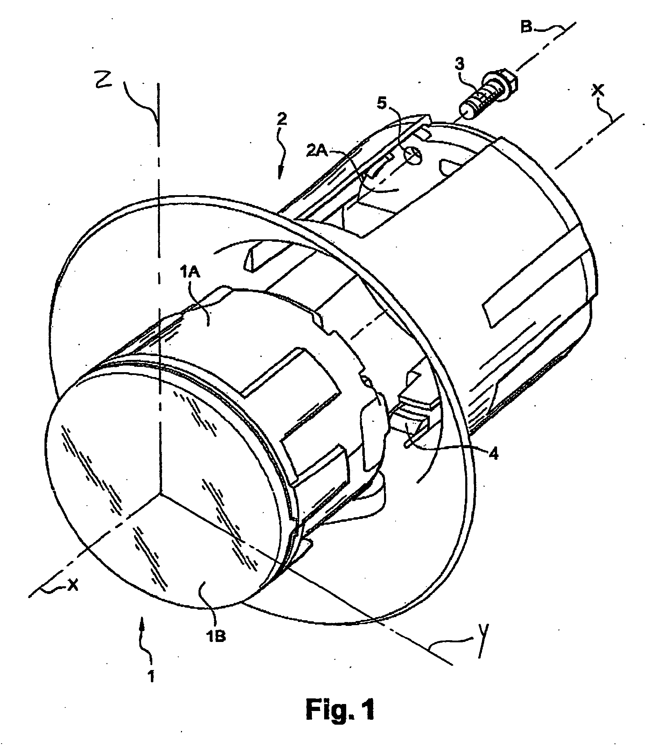

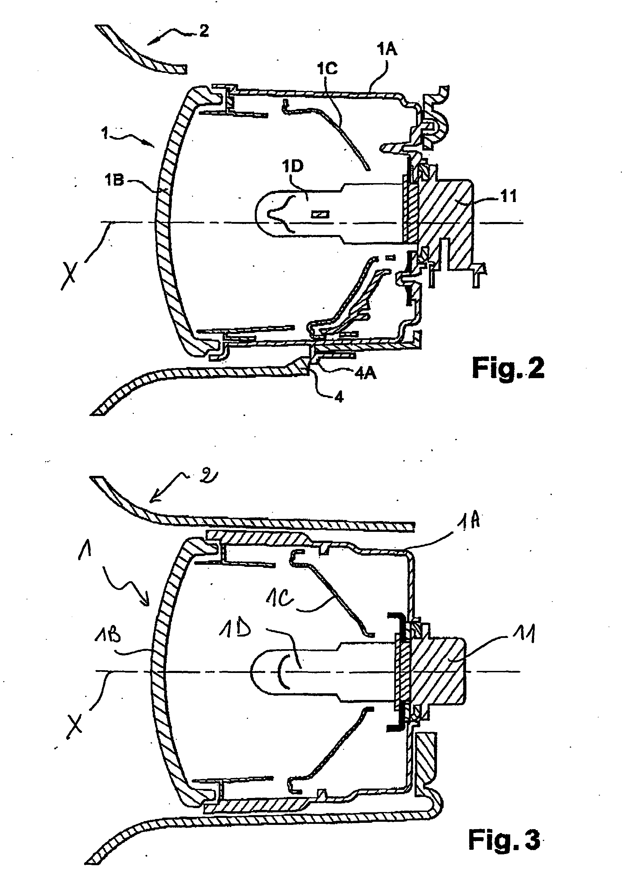

Comme représenté sur les figures 1 à 4, un bouclier ou pare-chocs 2 de véhicule automobile, ici représenté partiellement comporte une cavité dans laquelle est encastré et monté selon un axe X un projecteur 1 comportant un boîtier d'optique 1A, une glace 1B, un réflecteur 1C et une lampe 1D. Le fond de la cavité du bouclier 2 comporte une ouverture 10 destiné au passage des organes de connexion électrique 11 des éléments internes du projecteur, tels que la lampe et/ou l'actionneur de pivotement du réflecteur. Dans cet example, il s'agit d'un projecteur de type anti brouillard.

Dans cette cavité, le projecteur 1 est positionné, maintenu et fixé.

Les moyens de positionnement sont constitués de surfaces de contact du boîtier 1A du projecteur 1 sur la cavité, les moyens de fixation comportent une vis 3, d'axe longitudinal B parallèle au premier axe X et les moyens de maintien en position complémentaires comporte un dispositif de clipsage 4, 4A disposé à proximité du point bas des deux éléments 1, 2.

La vis 3 est vissée par l'extérieur du bouclier 2 du côté opposé au projecteur 1 et donc est à l'intérieur du véhicule assurant une sécurité contre un démontage par un tiers et le vol du projecteur. Pour cette fixation du projecteur sur le bouclier, elle est introduite dans un orifice 5 de la face arrière 2A de la cavité et vient en prise dans un filetage intérieur 12 agencé dans le boîtier 1A du projecteur.

Avant d'être clipsé par le dispositif de clipsage 4 et fixé par la vis 3, le projecteur 1 est positionné grâce à des moyens de positionnement dans la cavité formant un système isostatique, assurant son positionnement centré automatique.

Ce système isostatique comprend au moins six paires de surfaces de contact complémentaires de dimension réduite de l'élément d'équipement sur la cavité. Ces surfaces de contact sont de petite dimension, afin d'obtenir des contacts quasi ponctuels tout en tenant compte des contraintes de fabrication et des contraintes mécaniques.

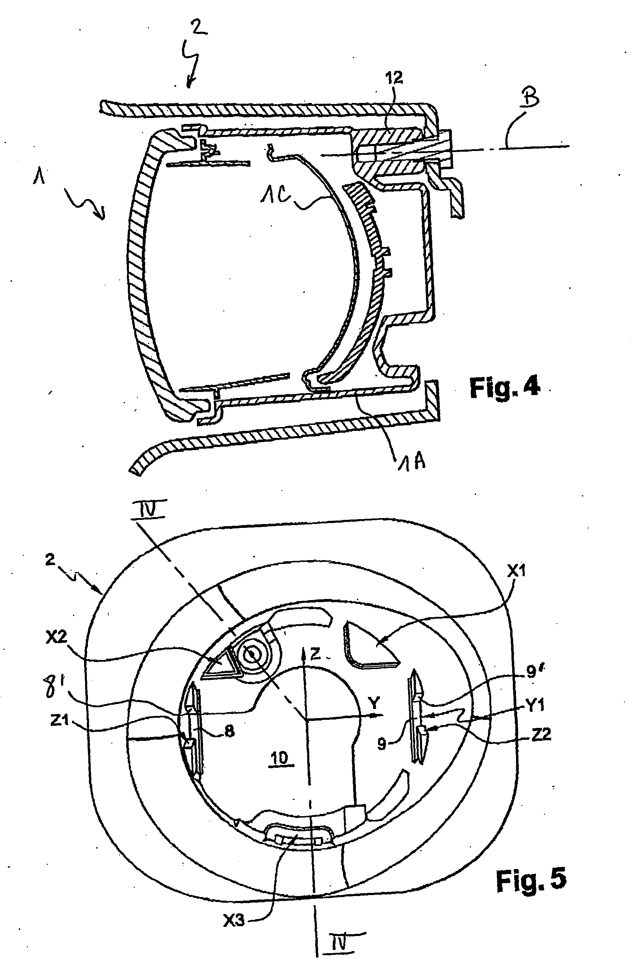

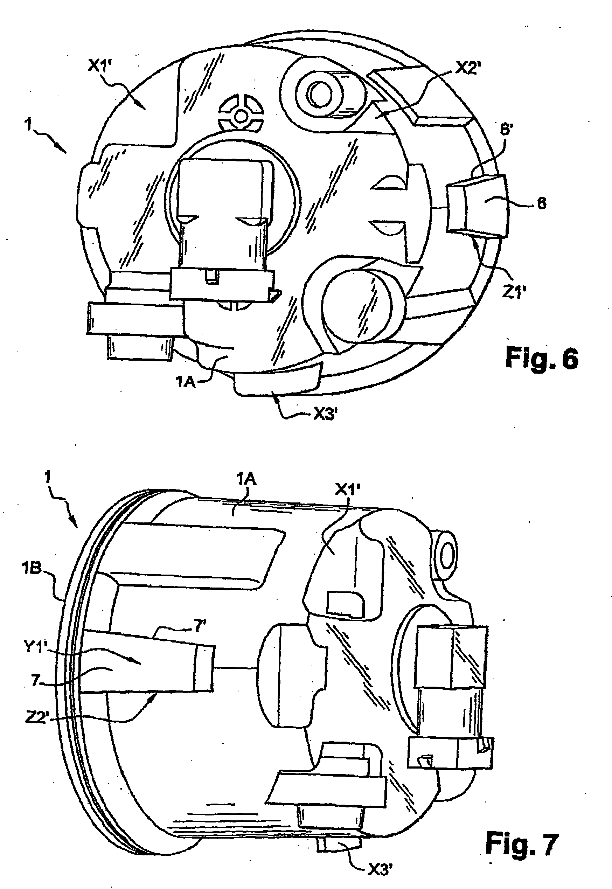

Sont prévues trois paires de surfaces de contact complémentaires perpendiculaires au premier axe X qui correspond généralement à l'axe longitudinal horizontal du véhicule automobile. Pour ce faire, comme visible sur la figure 5, le bouclier 2 comporte trois surfaces de contact X1, X2, X3 agencées dans le fond de la cavité du bouclier 2 ou sur la paroi latérale de celle-ci. Ces surfaces d'appui sont perpendiculaires à l'axe X. Le boîtier 1A du projecteur 1 comporte quant à lui trois surfaces d'appui correspondantes X1', X2', X3' visibles sur les figures 6 et 7. Ces surfaces d'appui sont parfaitement parallèles aux précédentes et mises en appui sur celles-ci lors de l'encastrement du boîtier de projecteur dans le bouclier elles assurent un parfait positionnement dans le sens de l'axe X.

Sont également prévues deux paires de surfaces de contact complémentaires perpendiculaires à un deuxième axe Z perpendiculaire au premier axe X et ici, en position montée du bouclier, parallèle à l'axe vertical du véhicule. Pour ce faire, comme visible sur la figure 5, le bouclier 2 comporte deux surfaces de contact Z1, Z2 agencées sur la paroi latérale de la cavité du bouclier 2. Ces surfaces d'appui sont perpendiculaires à l'axe Z. Le boîtier 1A du projecteur 1 comporte quant à lui deux surfaces d'appui correspondantes Z1', Z2' visibles sur les figures 6 et 7. Ces surfaces d'appui sont parfaitement parallèles aux précédentes et mises en appui sur celles-ci lors de l'encastrement du boîtier de projecteur dans le bouclier elles assurent un parfait positionnement dans le sens de l'axe Z. Plus précisément, ces surfaces d'appui Z1', Z2' sont conformées par deux nervures de surface frontale trapézoïdale 6, 7 agencées sur la surface latérale du boîtier 1A et les surfaces d'appui correspondantes Z1, Z2 sur le bouclier 2 sont conformées par deux rainures 8, 9 sur la paroi latérale de la cavité du bouclier 2 dans lesquelles sont emboîtées les deux nervures 6, 7 du boîtier 1A du projecteur 1. Les surfaces de ces nervures 6', 7' et rainures 8', 9' opposées aux surfaces d'appui Z1, Z2, Z1', Z2' forment ainsi des surfaces d'appui auxiliaires.

Est aussi prévue une paire de surfaces de contact complémentaires perpendiculaires à un troisième axe Y perpendiculaire au premier axe X et au deuxième axe Z et ici, en position montée du bouclier, parallèle à l'axe horizontal transversal du véhicule. Pour ce faire, comme visible sur la figure 5, le bouclier 2 comporte une surface de contact Y1 agencée sur la paroi latérale de la cavité du bouclier 2. Cette surface d'appui est perpendiculaire à l'axe Y. Le boîtier 1A du projecteur 1 comporte quant à lui une surface d'appui correspondante Y1' visible sur les figures 6 et 7. Cette surface d'appui est parfaitement parallèle à la précédente et mise en appui sur celle-ci lors de l'encastrement du boîtier de projecteur dans le bouclier elle assure un parfait positionnement dans le sens de l'axe Y. Plus précisément, cette surface d'appui Y1' est conformée par la surface frontale trapézoïdale de la nervure 7 agencée sur la surface latérale du boîtier 1A et la surface d'appui correspondante Y1 sur le bouclier 2 est conformée par le fond de la rainure 9 sur la paroi latérale de la cavité du bouclier 2 dans laquelle est emboîtée la nervure 7 du boîtier 1A du projecteur 1. Les surfaces frontales de la nervure 6' et de la rainure 8' opposées aux surfaces d'appui Y1, Y1' forment ainsi des surfaces d'appui auxiliaires.

Dans ce qui précède, est entendue par surface de contact perpendiculaire à une droite/ à un axe une surface qui peut être non plane mais dont le plan tangeant passant par le point de contact est perpendiculaire ou substantiellement perpendiculaire à cette droite/à cet axe. Il peut ainsi s'agir de paires de surfaces complémentaires au moins partiellement courbes, par exemple, où l'une des surfaces est au moins partiellement convexe et l'autre surface est au moins partiellement concave avec un degré de courbure substantiellement identique, de façon à avoir des formes complémentaires. Il peut aussi s'agir de paires de surfaces de contact où chacune des deux surfaces est au moins partiellement convexe, ou de paires de surfaces de contact où l'une des surface est plane et l'autre courbe.

L'invention n'est pas limitée au mode de réalisation préféré décrit ci-dessus. Entre autres, le système de positionnement isostatique par surfaces de contact peut être conçu de manière différente et équivalente, en particulier en ce qui concerne le choix du nombre et de la direction de ces contacts.

## Revendications

1. Agencement pour le positionnement et la fixation d'un élément d'équipement (1) par encastrement selon un premier axe (X) dans une cavité d'un élément de structure (2) d'un véhicule automobile, comprenant des moyens de positionnement constitués de paires de surfaces de contact complémentaires sur l'élément d'équipement et sur la cavité et des moyens de fixation comportant un élément de verrouillage assurant le serrage d'une paroi de l'élément d'équipement (1) et d'une paroi d'élément de structure (2), ledit élément de serrage étant unique et dans une direction substantiellement parallèle audit premier axe (X), **caractérisé en ce que** lesdits moyens de positionnement comportent au moins six paires de surfaces de contact complémentaires de dimension réduite sur l'élément d'équipement (1) et sur la cavité, ces surfaces de contact formant un système isostatique.

2. Agencement selon la revendication 1, **caractérisé en ce que** ledit élément de serrage est une vis (3) d'axe longitudinal substantiellement parallèle audit premier axe (X).

3. Agencement selon la revendication 1 ou 2, **caractérisé en ce que** lesdits moyens de positionnement sont des moyens d'auto centrage de l'élément d'équipement (1) dans ladite cavité de l'élément de structure (2).

4. Agencement selon l'une des revendications précédentes, **caractérisé en ce que** lesdits moyens de positionnement comportent trois paires de surfaces de contact complémentaires (X1, X2, X3, X1', X2', X3') perpendiculaires audit premier axe (X).

5. Agencement selon l'une des revendications précédentes, **caractérisé en ce que** lesdits moyens de positionnement comportent deux paires de surfaces de contact complémentaires (Z1, Z2, Z1', Z2') perpendiculaires à un deuxième axe perpendiculaire au premier axe.

6. Agencement selon l'une des revendications précédentes, **caractérisé en ce que** lesdits moyens de positionnement comportent une paire de surfaces de contact complémentaires (Y1, Y1') perpendiculaire à un troisième axe perpendiculaire au premier axe et au deuxième axe.

7. Agencement selon l'une des revendications 4 à 6, **caractérisé en ce que** le premier axe est substantiellement parallèle à l'axe horizontal longitudinal du véhicule.

8. Agencement selon l'une des revendications précédentes, **caractérisé en ce qu'**il comporte également des moyens de maintien en position.

9. Agencement selon la revendication 8, **caractérisé en ce que** lesdits moyens de maintien comportent un dispositif de clipsage (4, 4A) disposé à proximité du point bas des deux éléments (1, 2).

10. Agencement selon l'une des revendications précédentes, **caractérisé en ce que** ledit élément de structure est un bouclier ou pare-chocs ou un élément de type décoratif lié à la carrosserie du véhicule.

11. Dispositif d'éclairage et/ou de signalisation constituant un élément d'équipement (1) pouvant être positionné et fixé dans une cavité d'un élément de structure (2) d'un véhicule automobile au moyen d'un agencement selon l'une des revendications précédentes, et comportant un boîtier (1A) comprenant un filetage intérieur unique (12) comme élément de serrage, d'axe longitudinal parallèle audit premier axe (X).

12. Dispositif selon la revendication 11, **caractérisé en ce que** son boîtier (1A) comporte au moins trois surfaces de contact (X1, X2, X3) perpendiculaires audit premier axe (X).

13. Dispositif selon la revendication 12, **caractérisé en ce que** son boîtier (1A) comporte au moins deux surfaces de contact (Z1, Z2) perpendiculaires à un deuxième axe perpendiculaire audit premier axe (X).

14. Dispositif selon la revendication 13, **caractérisé en ce que** son boîtier (1A) comporte au moins une surface de contact (Y1) perpendiculaire à un troisième axe perpendiculaire au premier axe et au deuxième axe.

15. Dispositif selon l'une des revendications 11 à 14, **caractérisé en ce que** son boîtier (1A) comporte un élément de clipsage (4A) à proximité de son point bas.

16. Véhicule automobile équipé d'au moins un dispositif d'éclairage selon l'une des revendications 11 à 15.

## Claims

1. Arrangement for positioning and fixing an equipment element (1) by recessing same along a first axis (X) in a cavity of a structural element (2) of a motor vehicle, comprising positioning means formed by pairs of complementary contact surfaces on the equipment element and on the cavity, and fixing means comprising a locking element for clamping a wall of the equipment element (1) and a wall of the structural element (2), said clamping element being a single element disposed in a direction substantially parallel to said first axis (X), **characterised in that** said positioning means include at least six pairs of complementary contact surfaces of reduced dimensions on the equipment element (1) and on the cavity, said contact surfaces forming an isostatic system.

2. Arrangement according to claim 1, **characterised in that** said clamping element is a screw (3) having a longitudinal axis substantially parallel to said first axis (x).

3. Arrangement according to claim 1 or 2, **characterised in that** said positioning means are means for self-centring the equipment element (1) in said cavity of the structural element (2).

4. Arrangement according to any one of the preceding claims, **characterised in that** said positioning means comprise three pairs of complementary contact surfaces (X1, X2, X3, X1', X2', X3') perpendicular to said first axis (X).

5. Arrangement according to any one of the preceding claims, **characterised in that** said positioning means comprise two pairs of complementary contact surfaces (Z1, Z2, Z1', Z2') perpendicular to a second axis perpendicular to the first axis.

6. Arrangement according to any one of the preceding claims, **characterised in that** said positioning means comprise one pair of complementary contact surfaces (Y1, Y1') perpendicular to a third axis perpendicular to the first axis and to the second axis.

7. Arrangement according to any one of claims 4 to 6, **characterised in that** the first axis is substantially parallel to the horizontal longitudinal axis of the vehicle.

8. Arrangement according to any one of the preceding claims, **characterised in that** it also includes position-maintaining means.

9. Arrangement according to claim 8, **characterised in that** said position-maintaining means include a snap-fixing device (4, 4A) disposed in the vicinity of the lowest point of the two elements (1, 2).

10. Arrangement according to any one of the preceding claims, **characterised in that** said structural element is a lower front panel or a bumper or a decorative element connected to the vehicle body.

11. Lighting and/or signalling device constituting an equipment element (1) able to be positioned and fixed in a cavity of a structural element (2) of a motor vehicle by means of the arrangement according to any one of the preceding claims and including a housing (1A) which has a single internal screw thread (12) having a longitudinal axis parallel to the first axis (X), as the clamping element.

12. Device according to claim 11, **characterised in that** the housing (1A) includes at least three contact surfaces (X1, X2, X3) perpendicular to said first axis (X).

13. Device according to claim 12, **characterised in that** the housing (1A) includes at least two contact surfaces (Z1, Z2) perpendicular to a second axis perpendicular to said first axis (X).

14. Device according to claim 13, **characterised in that** the housing (1A) includes at least one contact surface (Y1) perpendicular to a third axis perpendicular to the first axis and to the second axis.

15. Device according to any one of claims 11 to 14, **characterised in that** the housing (1A) includes a snap-fixing element (4A) in the vicinity of its lowest point.

16. Motor vehicle equipped with at least one lighting device according to any one of the claims 11 to 15.

## Patentansprüche

1. Anordnung zum Positionieren und Befestigen eines Ausstattungsteils (1) durch Einpassen entlang einer ersten Achse (X) in eine Höhlung eines Strukturteils (2) eines Kraftfahrzeugs, mit Positionierungsmitteln, die aus komplementären Passflächenpaaren auf dem Ausstattungsteil und in der Höhlung gebildet sind, und Befestigungsmitteln, die ein Verriegelungselement umfassen, das das Festklemmen einer Wand des Ausstattungsteils (1) und einer Wand des Strukturteils (2) gewährleistet, wobei das Klemmelement einmalig vorhanden ist und sich in einer zur ersten Achse (X) im Wesentlichen parallelen Richtung erstreckt,
**dadurch gekennzeichnet, dass** die Positionierungsmittel wenigstens sechs komplementäre Passflächenpaare mit geringer Größe auf dem Ausstattungsteil (1) und in der Höhlung umfassen, wobei die Passflächen ein isostatisches System bilden.

2. Anordnung nach Anspruch 1,
**dadurch gekennzeichnet, dass** das Klemmelement eine Schraube (3) mit einer zur ersten Achse (X) im Wesentlichen parallelen Längsachse ist.

3. Anordnung nach Anspruch 1 oder 2,
**dadurch gekennzeichnet, dass** die Positionierungsmittel Mittel zur Selbstzentrierung des Ausstattungsteils (1) in der Höhlung des Strukturteils (2) sind.

4. Anordnung nach einem der vorhergehenden Ansprüche,
**dadurch gekennzeichnet, dass** die Positionierungsmittel drei komplementäre Passflächenpaare (X1, X2, X3, X1', X2', X3') umfassen, die senkrecht zur ersten Achse (X) sind.

5. Anordnung nach einem der vorhergehenden Ansprüche,
**dadurch gekennzeichnet, dass** die Positionierungsmittel zwei komplementäre Passflächenpaare (Z1, Z2, Z1', Z2') umfassen, die senkrecht zu einer zweiten zur ersten Achse senkrechten Achse sind.

6. Anordnung nach einem der vorhergehenden Ansprüche,
**dadurch gekennzeichnet, dass** die Positionierungsmittel ein komplementäres Passflächenpaar (Y1, Y1') umfassen, das senkrecht zu einer dritten zur ersten und zur zweiten Achse senkrechten Achse ist.

7. Anordnung nach einem der Ansprüche 4 bis 6,
**dadurch gekennzeichnet, dass** die erste Achse im Wesentlichen parallel zu der horizontalen Längsachse des Fahrzeugs ist.

8. Anordnung nach einem der vorhergehenden Ansprüche,
**dadurch gekennzeichnet, dass** sie auch Positionshaltemittel umfasst.

9. Anordnung nach Anspruch 8,
**dadurch gekennzeichnet, dass** die Haltemittel eine Clip-Vorrichtung (4, 4A) umfassen, die in der Nähe des tiefsten Punktes der beiden Teile (1, 2) angeordnet ist.

10. Anordnung nach einem der vorhergehenden Ansprüche,
**dadurch gekennzeichnet, dass** das Strukturteil eine Frontschürze oder ein Stoßfänger oder ein mit der Fahrzeugkarosserie verbundenes Zierelement ist.

11. Beleuchtungs- und/oder Signalvorrichtung, die ein Ausstattungsteil (1) bildet, das in einer Höhlung eines Strukturteils (2) eines Kraftfahrzeugs mittels einer Anordnung nach einem der vorhergehenden Ansprüche positioniert und befestigt werden kann, und ein Gehäuse (1A) mit einem einzigen Innengewinde (12) als Klemmelement mit einer zur ersten Achse (X) parallelen Längsachse aufweist.

12. Vorrichtung nach Anspruch 11,
**dadurch gekennzeichnet, dass** ihr Gehäuse (1A) wenigstens drei Passflächen (X1, X2, X3) aufweist, die senkrecht zur ersten Achse (X) sind.

13. Vorrichtung nach Anspruch 12,
**dadurch gekennzeichnet, dass** ihr Gehäuse (1A) wenigstens zwei Passflächen (Z1, Z2) aufweist, die senkrecht zu einer zweiten zur ersten Achse (X) senkrechten Achse sind.

14. Vorrichtung nach Anspruch 13,
**dadurch gekennzeichnet, dass** ihr Gehäuse (1A) wenigstens eine Passfläche (Y1) aufweist, die senkrecht zu einer dritten zur ersten und zur zweiten Achse senkrechten Achse ist.

15. Vorrichtung nach einem der Ansprüche 11 bis 14,
**dadurch gekennzeichnet, dass** ihr Gehäuse (1A) ein Clipteil (4A) in der Nähe ihres tiefsten Punktes aufweist.

16. Kraftfahrzeug, ausgestattet mit wenigstens einer Beleuchtungsvorrichtung nach einem der Ansprüche 11 bis 15.
